# EUROPEAN PATENT APPLICATION

(11) **EP 0 712 894 A2**
(43) Date of publication of application: **22.05.1996**
(21) Application number: 95307902.7
(22) Date of filing: 06.11.1995
(51) Int. Cl.: C08L 25/12

(54) **Impact modified vinyl aromatic-vinyl cyanide copolymer compositions**

(30) Priority: 21.11.1994 US 342464
(71) Applicant: GENERAL ELECTRIC COMPANY, Schenectady, NY 12345 (US)
(72) Inventor: Kuruganti, Vijaya Kumar, Washington, West Virginia 26181 (US); Gaggar, Satish Kumar, Parkersburg, West Virginia 26101 (US); St Jean, Robert Arthur, Parkersburg, West Virginia 26101 (US)
(74) Representative: Szary, Anne Catherine

(57) **Abstract**

A thermoplastic composition is provided exhibiting reduced opacity and enhanced impact strength. The composition contains a (a) vinyl aromatic-vinyl cyanide copolymer and (b) an emulsion polymerized graft copolymer comprising (i) a vinyl aromatic-diene rubber substrate having a number average particle size of from 0.21 microns to 0.40 microns, said substrate being formed by mechanical agglomeration to achieve latex agglomeration of vinyl aromatic-diene particles having a number average particle size of from 0.05 microns and 0.10 microns to form a latex of agglomerated particles, and (ii) a vinyl aromatic-vinyl cyanide copolymer superstrate formed by reacting a vinyl aromatic monomer and a vinyl cyanide monomer in the presence of a redox initiator and said latex of agglomerated particles, wherein said emulsion polymerized graft copolymer is present at a level of from 20 to 60 percent by weight based on the total weight of the composition. The composition requires reduced levels of pigment for a given level of color intensity, and are useful for making floor care equipments such as vacuum cleaner housings and toys.

## Description

The present invention relates to vinyl aromatic-vinyl cyanide copolymer compositions, and more particularly relates to impact modified vinyl aromatic-vinyl cyanide copolymer compositions.

### DESCRIPTION OF THE RELATED ART

Vinyl aromatic-vinyl cyanide copolymers exhibit various desirable physical properties, but are generally brittle. Impact modification of such copolymers has generally involved blending therewith a rubber modified graft copolymer, but the resulting compositions typically exhibit higher than desired levels of opacity, and less than optimum levels of impact strength. High levels of opacity generally require relatively high levels of pigment loadings to attain a given level of color intensity in the compositions.

Consequently, there is a need and desire to provide impact modified vinyl aromatic-vinyl cyanide compositions exhibiting enhanced levels of impact strength and a reduced level of opacity.

### Summary of the Invention

The present invention involves thermoplastic compositions comprising (a) a non-substituted vinyl aromatic-vinyl cyanide copolymer present at a level of from 40 to 80 percent by weight based on the total weight of the composition; and (b) an emulsion polymerized graft copolymer comprising (i) a vinyl aromatic-diene rubber substrate having a weight average particle size of from 0.21 microns to 0.40 microns, said substrate being formed by mechanical agglomeration to achieve latex agglomeration of vinyl aromatic-diene particles having a number average particle size of from 0.05 microns and 0.10 microns to form a latex of agglomerated particles, and (ii) a vinyl aromatic-vinyl cyanide copolymer superstrate formed by reacting a vinyl aromatic monomer and a vinyl cyanide monomer in the presence of a redox initiator and said latex of agglomerated particles, wherein said emulsion polymerized graft copolymer is present at a level of from 20 to 60 percent by weight based on the total weight of the composition. The reduced opacity level of the composition allows for the utilization of reduced pigment loadings for a given level of color intensity. The compositions also exhibit relatively high impact strengths.

### Detailed Description of the Invention

The thermoplastic composition is provided comprising (a) a vinyl aromatic-vinyl cyanide copolymer present at a level of from 40 to 80 percent by weight based on the total weight of the composition, more preferably from 45 to 75 percent by weight thereof, and most preferably from 60 to 70 percent by weight thereof; (b) an emulsion polymerized graft copolymer present at a level of from 20 to 60 percent by weight based on the total weight of the composition, more preferably from 25 to 55 percent by weight thereof, and most preferably from 30 to 40 percent by weight thereof. The compositions are useful for making molded articles such as vacuum cleaner housings and toys.

The vinyl aromatic-vinyl cyanide copolymer is a non-alkyl substituted vinyl aromatic-vinyl cyanide copolymer most preferably comprises a relatively high level of vinyl cyanide. Preferably the vinyl cyanide is present at a level of from 20 to 40 percent by weight based on the total weight of the copolymer, more preferably from 22 to 37 percent by weight thereof, and most preferably from 25 to 35 percent by weight thereof. Preferably the copolymer is a styrene-acrylonitrile copolymer.

The emulsion polymerized graft copolymer is critical to the present invention to attain the desired combination of properties. The emulsion polymerized graft copolymer comprises (a) a vinyl aromatic-diene rubber substrate having a weight average particle size of from 0.21 microns to 0.40 microns, wherein the substrate is formed by mechanical agglomeration to achieve agglomeration of a latex of vinyl aromatic-diene particles having a number average particle size of from 0.05 microns to 0.10 microns, and (b) a vinyl aromatic-vinyl cyanide copolymer superstrate formed by reacting a vinyl aromatic monomer and a vinyl cyanide monomer in the presence of a redox initiator and the latex of agglomerated particles. The agglomerated particle substrate more preferably has a number average particle size of from 0.25 microns to 0.35 microns, and most preferably from 0.27 microns to 0.30 microns. The pre-agglomeration rubber particles more preferably have a number average particle size of between 0.07 microns and 0.09 microns, and most preferably between 0.08 microns and 0.09 microns. The vinyl aromatic-diene rubber substrate preferably has a vinyl aromatic component level of from 5 to 40 percent by weight based on the total weight of the substrate, more preferably from 10 to 30 percent by weight thereof, and most preferably from 15 to 20 percent by weight thereof; and has a diene component level of from 60 to 95 percent by weight based on the total weight of the substrate, more preferably from 70 to 90 percent by weight thereof, and most preferably from 80 to 85 percent by weight thereof. The vinyl aromatic-vinyl cyanide superstrate preferably comprises the vinyl aromatic at a level of from 60 to 90 percent by weight based on the total weight of the superstrate, and more preferably from 70 to 80 percent by weight thereof, and most preferably from 72 to 75 percent by weight thereof. The vinyl cyanide is preferably present at a level of from 10 to 40 percent by weight based on the total weight of the superstrate, more preferably from 20 to 30 percent by weight thereof, and most preferably from 25 to 28 percent by weight thereof. The substrate is preferably present in the emulsion polymerized graft copolymer at a level of from 20 to 70 percent by weight based on the total weight of the emulsion polymerized graft copolymer, more preferably from 45 to 70 percent by weight thereof, and most preferably from 50 to 60 percent by weight thereof.

Suitable redox initiators include di-tert-butyl peroxide, benzoyl peroxide, lauroyl peroxide, oleyl peroxide, toluyl peroxide, di-tert-butyl diperphthalate, tert-butyl peracetate, tert-butyl perbenzoate, dicumyl peroxide, tert-butyl peroxide, isopropyl carbonate, 2,5-dimethyl-2,5-dimethyl-2,5-di(tert-butylperoxy)hexane, 2,5-dimethyl-2,5-di(tert-butylperoxy) hexane-3 or hexyne-3, tert-butyl hydroperoxide, cumene hydroperoxide, p-menthane hydroperoxide, cyclopentane hydroperoxide, pinane hydroperoxide, 2,5-dimethylhexane-2,5-dihydroperoxide and mixtures thereof. The redox initiator results in good graft coverage, thereby preventing rubber agglomeration during melt mixing.

The thermoplastic compositions are useful for making molded articles such as automotive parts such as interior molded articles and containers and caps for floor care products, and preferably contain from 0.05 to 10 percent by weight pigments, more preferably from 0.1 to 5 percent by weight pigments, such as organic pigments, based on the total weight of the composition. The reduced opacity of the present compositions allows for the ability of reduced levels of pigment loading to achieve the desired level of color intensity thereby reducing the potential expense of higher pigment loadings.

The vinyl aromatic monomers which may be employed for the emulsion polymerized graft copolymer include styrene, alpha-methyl styrene, halostyrenes i.e. dibromostyrene, mono or di alkyl, alkoxy or hydroxy substitute groups on the nuclear ring of the vinyl aromatic monomer i.e. vinyl toluene, vinylxylene, butylstyrene, para-hydroxystyrene or methoxystyrene or mixtures thereof. The vinyl aromatic monomers utilized are generically described by the following formula: 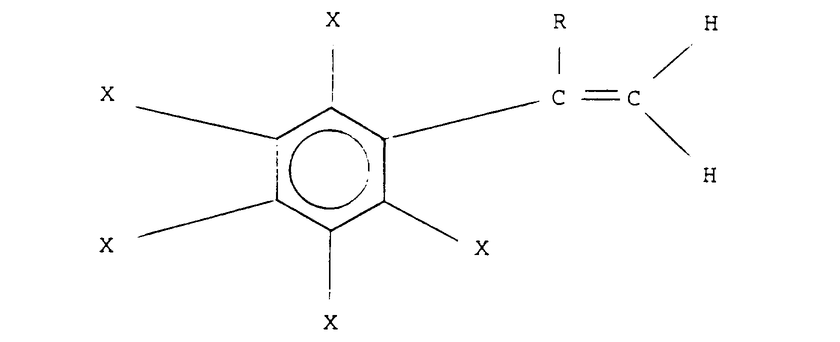 wherein X is selected from the group consisting of hydrogen, alkyl groups of 1 to 5 carbon atoms, cycloalkyl, aryl, alkaryl, aralkyl, alkoxy, aryloxy, and halogens. R is selected from the group consisting of hydrogen, alkyl groups of 1 to 5 carbon atoms and halogens such as bromine and chlorine. Examples of substituted vinylaromatic compounds include styrene, 4-methylstyrene, 3,5-diethylstyrene, 4-n-propylstyrene, α-methylstyrene, α-methyl vinyltoluene, α-chlorostyrene, α-bromostyrene, dichlorostyrene, dibromostyrene, tetrachlorostyrene, mixtures thereof and the like. The preferred vinyl aromatic monomers used are styrene and/or α-methylstyrene.

Suitable vinyl cyanide monomers include acrylonitrile and substituted vinyl cyanides such as methacrylonitrile. The acrylonitrile and substituted acrylonitrile are described generically by the following formula: 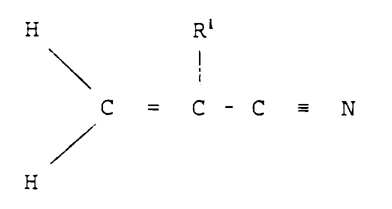 wherein R¹ may be selected from the same group set out for R as previously defined. Examples of such monomers include acrylonitrile, ethacrylonitrile, methacrylonitrile, a-chloroacrylonitrile, and α-bromoacrylonitrile.

Specific conjugated diene monomers normally utilized in preparing the rubber substrate of the graft polymer are generically described by the following formula: 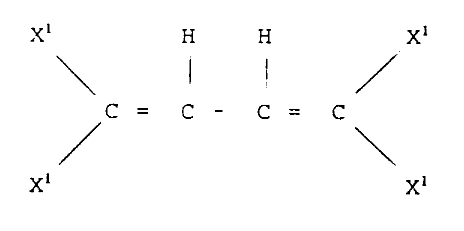 wherein X¹ is selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene, mixtures thereof, and the like. A preferred conjugated diene is 1,3 butadiene.

Preferred graft superstrates include copolymers of styrene and acrylonitrile, copolymers of α-methylstyrene and acrylonitrile or copolymers with up to 50% by weight of C₁-C₆ alkylacrylates, acrylonitrile or styrene. Specific examples of monovinylidene aromatic graft copolymers include but are not limited to the following: acrylonitrile-butadiene-styrene (ABS), and methylmethacrylate-acrylonitrile-butadiene-styrene (MABS). Preferably the superstrate is free of alkylacrylates such as methylmethacrylates.

### Examples

The ABS polyblends of the present examples comprise a matrix copolymer of mass polymerized styrene-acrylonitrile and an emulsion polymerized acrylonitrile-butadiene-styrene graft copolymer containing high rubber content (HRG). The polyblends were melt mixed in a Banbury mixer at a temperature sufficient to melt all the components and in the proportions described in Table 1. The resulting pellets were injection molded into test specimens at a stock temp. of 260°C and mold temp. of 66°C. Viscosities of pellets were measured by Capillary rheometer at 260°C according to ASTM D3835. Notched Izod testing was carried out according to ASTM D256. Dart impact testing was done according to ASTM D3039. Heat distortion temperature (HDT) was measured according to ASTM D648-82. The surface gloss and 20° reflection haze was measured by BYK Gardner haze-gloss reflectometer according to ASTM D523 and E430 respectively. Opacity of the blends is measured on a 25D Hunter Colorimeter and expressed as percent. Yellowness Index was measured on a 25D Hunter Colorimeter according to ASTM E313.

The Emulsion HRG-1 is produced by grafting on to a latex agglomerated particles of butadiene rubber (Mean particle size of 0.29 microns) with styrene and acrylonitrile monomers using a redox initiator system. Latex agglomeration of small (Mean particle size of 0.075 m) butadiene rubber latex particles was carried out via mechanical agglomeration in order to obtain latex agglomerated particles (mean particle size of 0.29 microns). Said redox initiated free radical graft polymerization imparts good graft coverage around the rubber particles in the HRG. Such a good graft coverage promotes good dispersion of rubber particles and improves surface gloss of molded parts. Weight ratio of acrylonitrile-butadiene-styrene in HRG-2 is 11.5/44/44.5.

The Emulsion HRG-2 is produced by grafting on to latex agglomerated particles (Mean particle size of 0.28 microns) of butadiene-styrene rubber (85/15) with styrene and acrylonitrile monomers using a redox initiator system. Latex agglomeration of small (Mean particle size of 0.085 microns) styrene-butadiene (15/85) rubber particles was carried out via a mechanical agglomeration in order to obtain latex agglomerated particles (mean particle size of 0.28 microns). Said redox initiated free radical graft polymerization results in a good graft coverage around the rubber particles in the HRG. Such a good graft coverage results in good dispersion of rubber particles and improves the surface gloss of molded parts. Weight ratio of acrylonitrile-butadiene-styrene in HRG-1 is 12.5/43.5/44.

SAN-1 is a copolymer of styrene-acrylonitrile (72/28 by weight) produced in mass polymerization.

SAN-2 is a copolymer of styrene-acrylonitrile (65/35 by weight) produced in mass polymerization.

EBS Wax (N,N' -ethylene bis(stearamide)) is a commercially available lubricant.

Wingstay L is commercially available antioxidant from GOODYEAR.

Ultranox 626 is commercially available antioxidant from GE.

**Table 1**

| | A | 1 | 2 |
|---|---|---|---|
| SAN-1 | 60 | 60 | 68 |
| HRG-1 | 40 | - | - |
| HRG-2 | - | 40 | 32 |
| EBS Wax | 0.5 | 0.5 | 1.0 |
| Mag. Oxide | 0.08 | 0.08 | 0.05 |
| Capillary Viscosity 260°C (poise) 1000/sec Shear | 1760 | 1728 | 1460 |
| 1/8" N.I. Impact RT (ft-lb/in) | 7.0 | 7.5 | 5.4 |
| Dart Impact RT (ft-lb) | 28 | 31 | 30 |
| -20°F (ft-lb/in) | 3.3 | 2.4 | 1.6 |
| Std. Dev. | 8 | 5 | 6 |
| 60° Gloss | 96 | 96 | 97 |
| 20° Gloss | 85 | 84 | 87 |
| 20° Haze | 89 | 67 | 78 |
| 1/8" Opacity (%) | 87 | 78 | 79 |
| Yellowness Index | 34 | 38 | 39 |

Formulations 1 and 2 show excellent impact/flow balance, lower reflection haze, and lower opacity readings compared to formulation A. Formulations 1 and 2 are new and novel compositions described in this invention. Polyblends based on formulations 1 and 2 will require less pigments in order to achieve same color development as that of polyblend based on formulation A. Polyblends based formulations 1 and 2 are useful in molding applications where strong intense colors are desired (for e.g. floor care products).

**Table 2**

| | 3 | 4 |
|---|---|---|
| SAN-1 | 68 | - |
| SAN-2 | - | 68 |
| HRG-2 | 32 | 32 |
| EBS Wax | 0.5 | 0.5 |
| Mag. Oxide | 0.08 | 0.08 |
| Capillary Viscosity 260°C (poise) 1000/sec Shear | 2003 | 1665 |
| 1/8" N.I. Impact RT (ft-lb/in) | 4.9 | 4.7 |
| -20°F (ft-lb/in) | 1.5 | 1.8 |
| Dart Impact RT (ft-lb) | 32 | 28 |
| Std. Dev. | 7 | 4 |
| 60° Gloss | 97 | 96 |
| 20° Gloss | 89 | 87 |
| 20° Haze | 45 | 54 |
| 1/8" Opacity (%) | 77 | 74 |
| Yellowness Index | 45 | 54 |

Formulations 3 and 4 show excellent impact/flow balance, lower reflection haze, and high surface gloss. Formulations 3 and 4 are new and novel composition described in this invention. Polyblends based on formulations 3 and 4 will require less pigments in order to achieve same color development as that of various other polyblends. Polyblends based formulations 3 and 4 are useful in molding applications where strong intense colors are desired (for e.g. floor care products).

## Claims

1. A thermoplastic composition comprising:
(a) a non(alkyl substituted) vinyl aromatic-vinyl cyanide copolymer present at a level of from 40 to 80 percent by weight based on the total weight of the composition; and
(b) an emulsion polymerized graft copolymer comprising
(i) a vinyl aromatic-diene rubber substrate having a number average particle size of from 0.21 microns to 0.40 microns, said substrate being formed by mechanical agglomeration to achieve agglomeration of a latex of vinyl aromatic-diene particles having a number average particle size of from 0.05 microns and 0.10 microns to form a latex of agglomerated particles, and
(ii) a vinyl aromatic-vinyl cyanide copolymer superstrate formed by reacting a vinyl aromatic monomer and a vinyl cyanide monomer in the presence of a redox initiator and said latex of agglomerated particles, wherein said emulsion polymerized graft copolymer is present at a level of from 20 to 60 percent by weight based on the total weight of the composition.

2. The composition of Claim 1 wherein said composition consists essentially of (a) and (b).

3. The composition of Claim 1 wherein said composition consists of (a) and (b).

4. The composition of Claim 1 wherein said non-substituted vinyl aromatic-vinyl cyanide copolymer is a non-substituted styrene-acrylonitrile copolymer.

5. The composition of Claim 4 wherein said styrene-acrylonitrile copolymer comprises styrene at a level of from 60 to 80 percent by weight based on the total weight of the copolymer, and comprises acrylonitrile at a level of from 20 to 40 percent by weight based on the total weight of the composition.

6. The composition of Claim 5 wherein said acrylonitrile is present at a level of from 25 to 35 percent by weight based on the total weight of the styrene-acrylonitrile copolymer.

7. The composition of Claim 5 wherein said styrene acrylonitrile copolymer is present at a level of from 45 to 75 percent by weight based on the total weight of the composition, and said emulsion graft copolymer is present at a level of from 25 to 55 percent by weight based on the total weight of the composition.

8. The composition of Claim 5 wherein said styrene acrylonitrile copolymer is present at a level of from 60 to 70 percent by weight based on the total weight of the composition, and said emulsion graft copolymer is present at a level of from 30 to 40 percent by weight based on the total weight of the composition.

9. A method for making a reduced opacity, enhanced impact strength thermoplastic composition, said method comprising:
(a) a non-substituted vinyl aromatic-vinyl cyanide copolymer present at a level of from 40 to 80 percent by weight based on the total weight of the composition; and
(b) an emulsion polymerized graft copolymer comprising
(i) a vinyl aromatic-diene rubber substrate having a number average particle size of from 0.21 microns to 0.40 microns, said substrate being formed by mechanical agglomeration to achieve latex agglomeration of vinyl aromatic-diene particles having a number average particle size of from 0.05 microns and 0.10 microns to form a latex of agglomerated particles, and
(ii) a vinyl aromatic-vinyl cyanide copolymer superstrate formed by reacting a vinyl aromatic monomer and a vinyl cyanide monomer in the presence of a redox initiator and said latex of agglomerated particles, wherein said emulsion polymerized graft copolymer is present at a level of from 20 to 60 percent by weight based on the total weight of the composition.
